(19) Europäisches Patentamt European Patent Office Office européen des brevets

(11) **EP 3 426 915 B1**

(12) **EUROPEAN PATENT SPECIFICATION**

(45) Date of publication and mention
of the grant of the patent:
**12.05.2021 Bulletin 2021/19**

(21) Application number: **17764288.1**

(22) Date of filing: **13.03.2017**

(51) Int Cl.:
*F03D 3/06* *(2006.01)*    *F03D 3/00* *(2006.01)*
*F03D 3/02* *(2006.01)*    *F03D 7/06* *(2006.01)*

(86) International application number:
**PCT/US2017/022170**

(87) International publication number:
**WO 2017/156536 (14.09.2017 Gazette 2017/37)**

(54) **WIND-POWERED CYCLO-TURBINE**

WINDGETRIEBENE ZYKLOTURBINE

CYCLOTURBINE ÉOLIENNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.03.2016 US 201662307371 P**

(43) Date of publication of application:
**16.01.2019 Bulletin 2019/03**

(73) Proprietors:
• **Gratzer, Louis B.**
  **Bellevue, WA 98006 (US)**
• **Gratzer, Richard L.**
  **Bellevue, WA 98006 (US)**

(72) Inventor: **GRATZER, Louis, B.**
**Bellevue**
**WA 98006 (US)**

(74) Representative: **Carter, Stephen John et al**
**K2 IP Limited**
**No.1 London Bridge**
**London SE1 9BA (GB)**

(56) References cited:
**WO-A1-2005/100785    WO-A1-2011/039404
WO-A2-2008/077403    US-A- 4 247 251
US-A1- 2009 136 346    US-A1- 2010 322 770
US-A1- 2014 023 500    US-A1- 2014 023 500
US-A1- 2015 233 353    US-B2- 7 931 444**

**Description**

**BACKGROUND OF THE INVENTION**

As the demand for clean, renewable power continues to escalate throughout the world, the use of wind power is becoming increasingly attractive. Combined with advances in other technologies it is also becoming economically competitive with older, more traditional sources of power. This trend is expected to accelerate until environmental issues, demand for efficient use of space, scarcity of favorable siting and system economics place significant limits on the exploitation of wind power.

Throughout centuries of exploitation of the wind for producing power, there has been a plethora of approaches to the design of machines for this purpose. Although a technical assessment of these various concepts might be interesting and even instructive, historical evidence shows that few if any are adaptable for efficient and economical exploitation of available sources of wind power in today's environment.

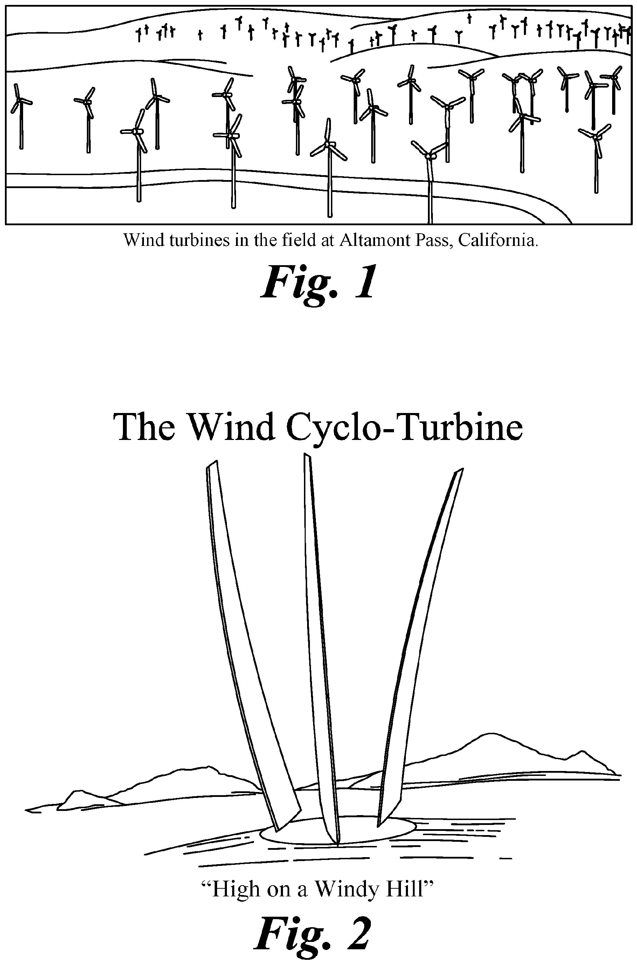

Judging by the prevalence today of systems comprising multiple units whose design is based on fan-type configurations such as shown in Figure 1, one may conclude that this approach has many advantages which would be difficult to overcome by any other system. However, it would nonetheless be beneficial to find such a system Prior art examples are disclosed in WO2005100785 and WO2011039404.

**BRIEF DESCRIPTION OF THE DRAWINGS**

Preferred and alternative examples of the present invention are described in detail below with reference to the following drawings:

FIG.1 illustrates wind turbines in the field at Altamont Pass, California.
FIG.2 illustrates a wind cyclo-turbine high on a windy hill.
FIG.3 is an underside view of the rotor system.
FIG.4 presents kinematic relationships between the blades and the rotor platform as functions of wind speed, rotor speed and blade orientation.

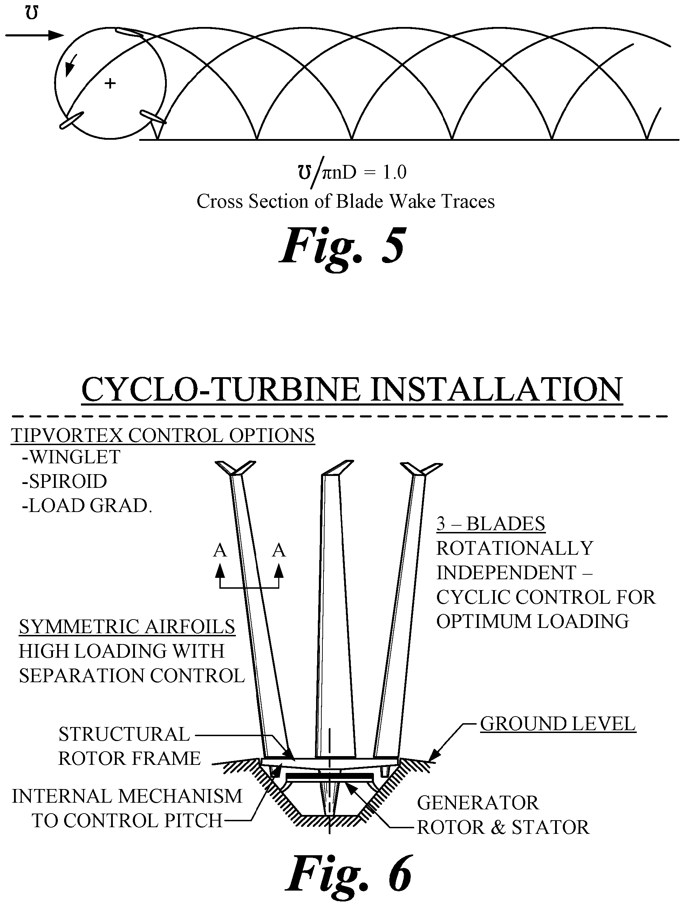

FIG.5 illustrates a cross section of blade wake traces.
FIG.6 illustrates one embodiment of the cyclo-turbine installation.

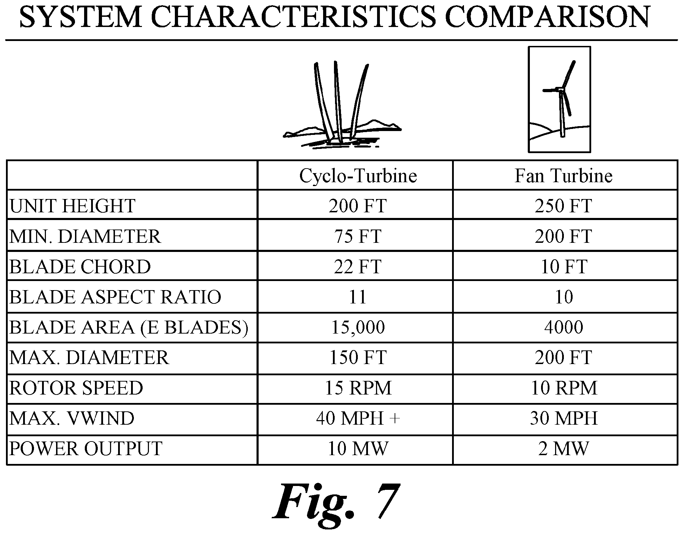

FIG.7 shows a comparison chart of system characteristics.

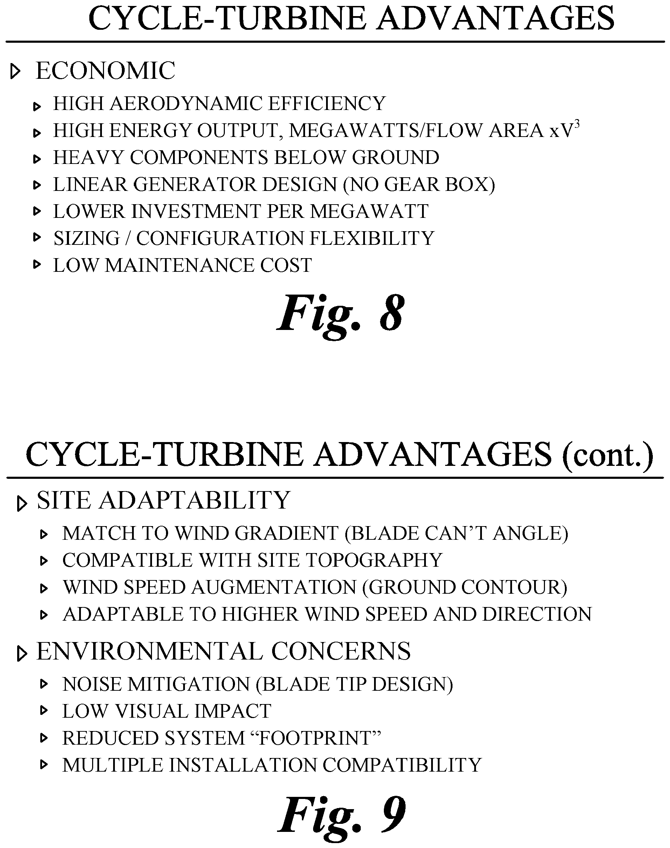

FIGS.8-9 are charts illustrating cycle-turbine advantages.

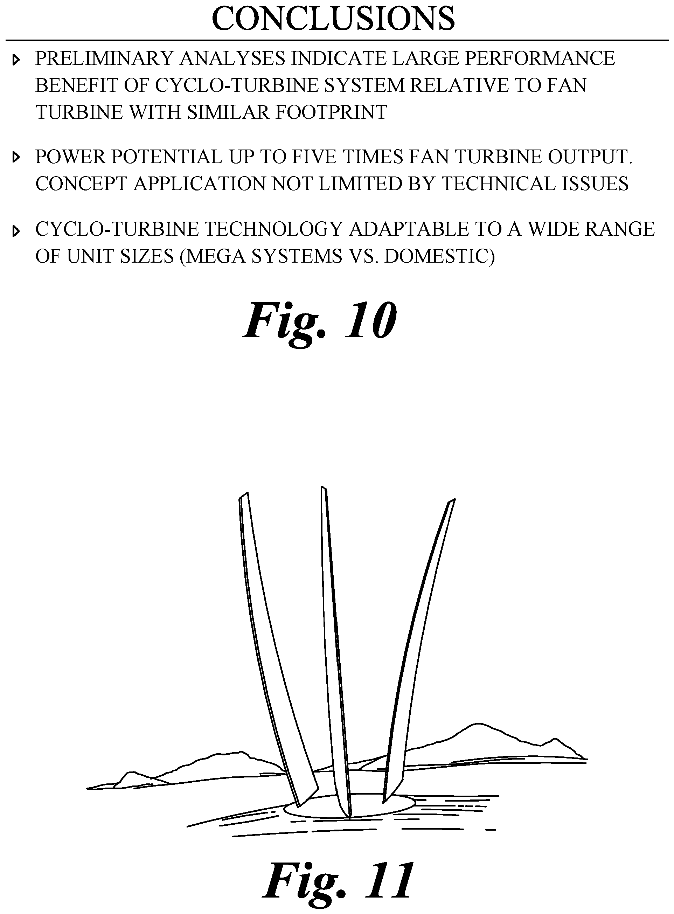

FIG.10 illustrates conclusions based on one embodiment of the invention.
FIG.11 illustrates an embodiment of the invention.

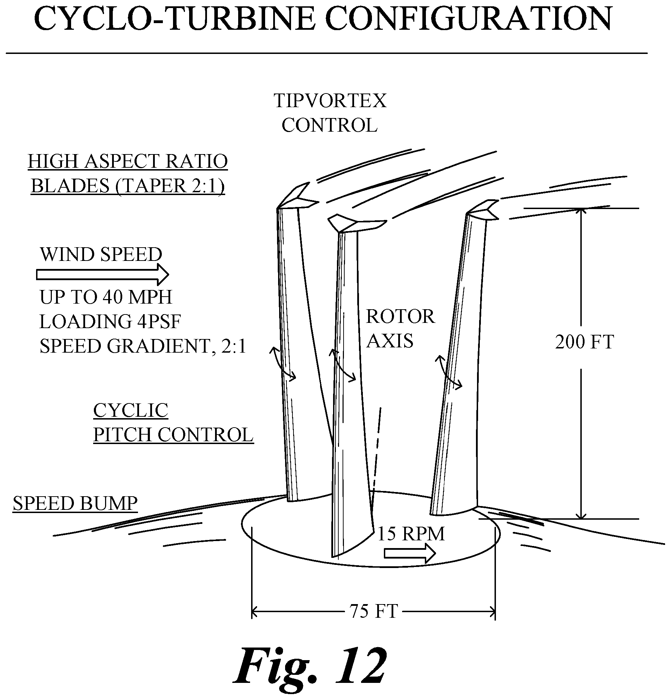

FIG.12 illustrates one embodiment of the cyclo-turbine configuration.

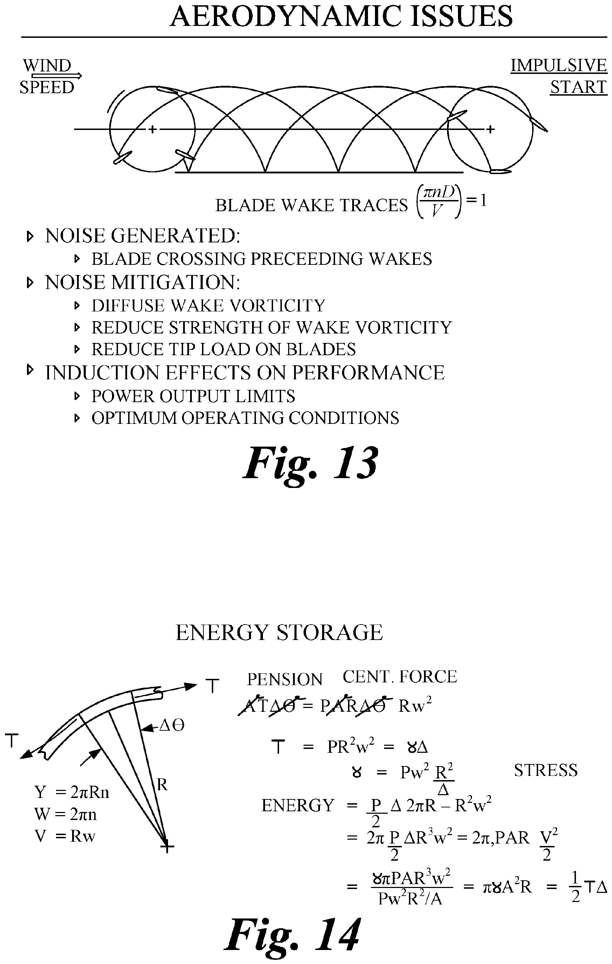

FIG. 13 illustrates aerodynamic issues.
FIG.14 illustrates energy storage.

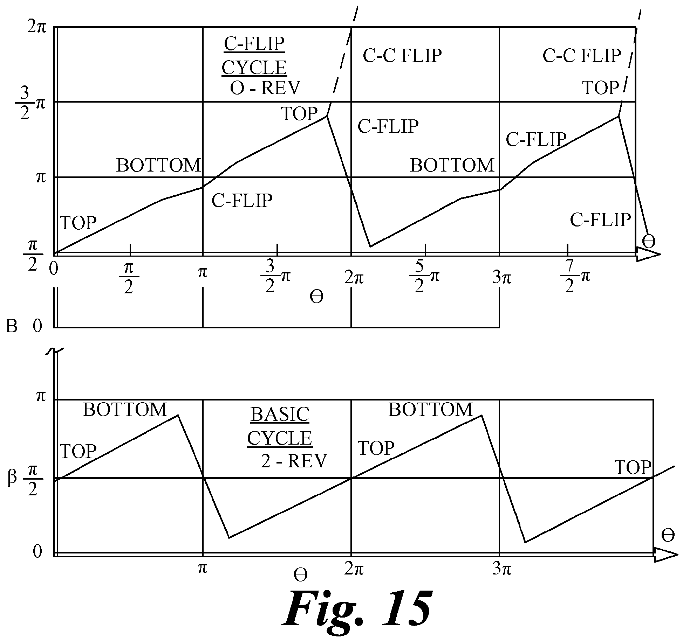

FIG.15 illustrates charts relating to an embodiment of the invention.

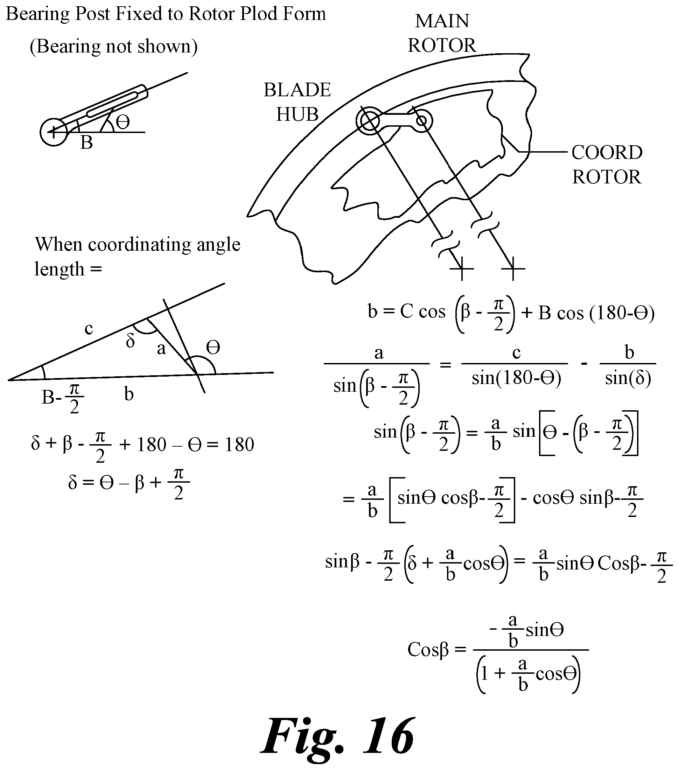

FIG. 16 illustrates bearing post fixed to rotor plod form.

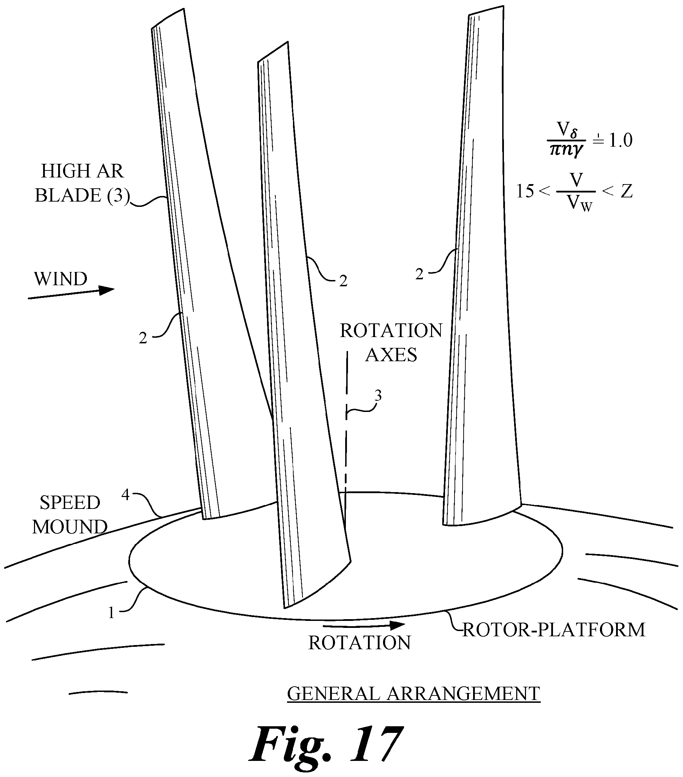

FIG.17 illustrates a general arrangement of one embodiment of the invention.

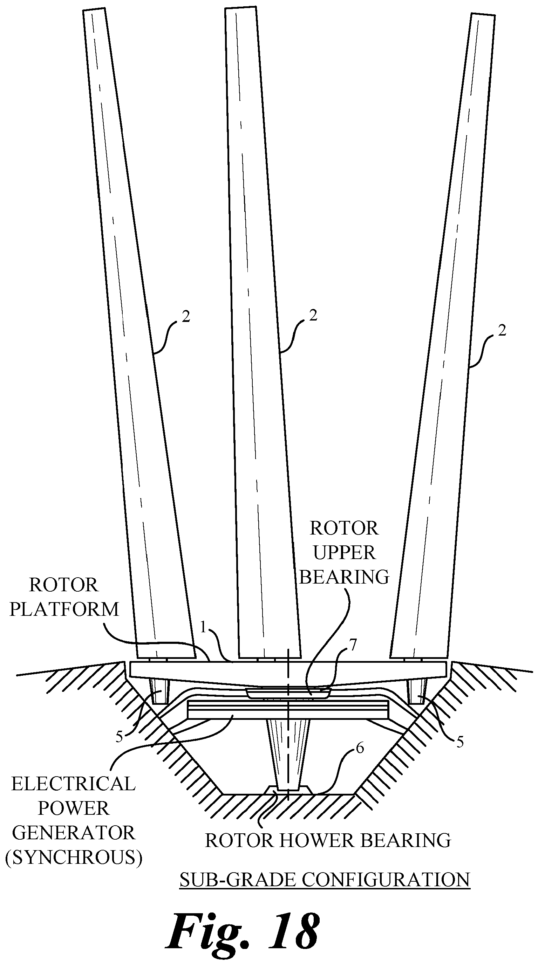

FIG.18 illustrates a sub-grade configuration of one embodiment of the invention.

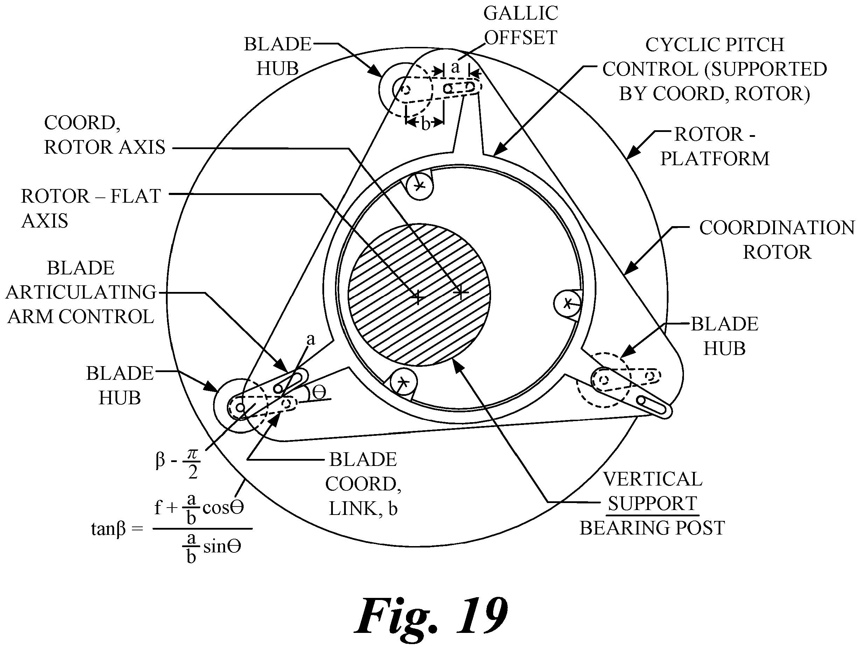

FIG.19 illustrates one embodiment of the invention.

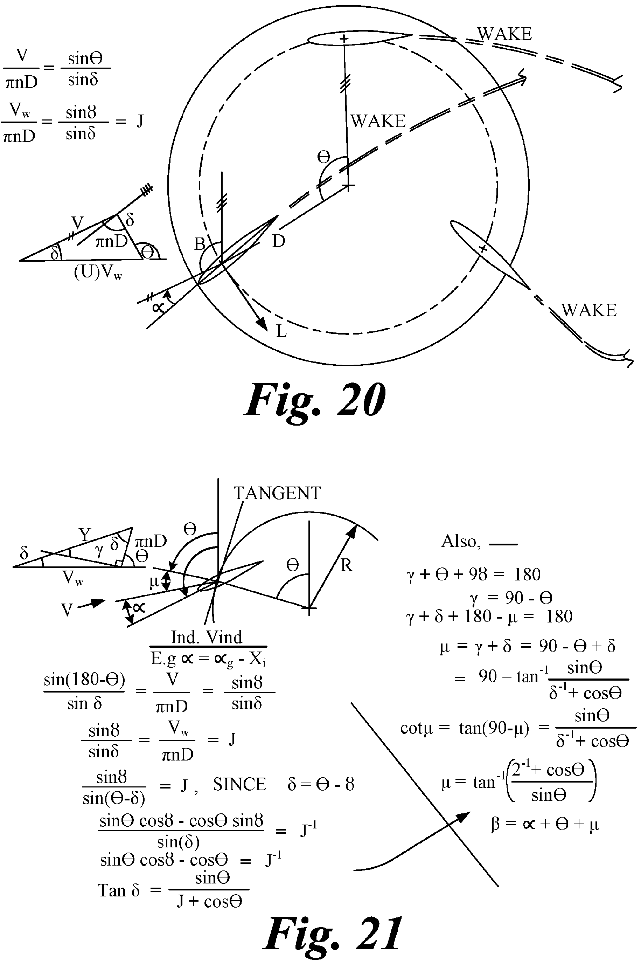

FIG.20 illustrates an embodiment of the invention.
FIG.21 illustrates yet another embodiment of the invention.

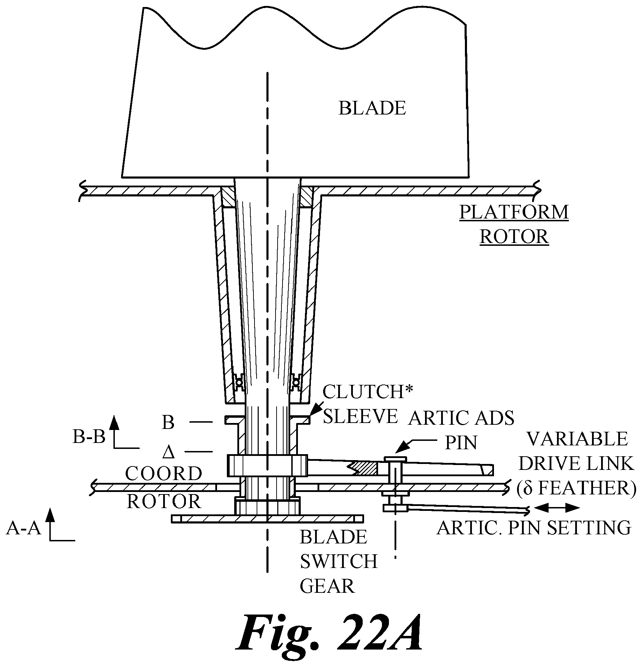

FIG.22A illustrates another embodiment of the invention.

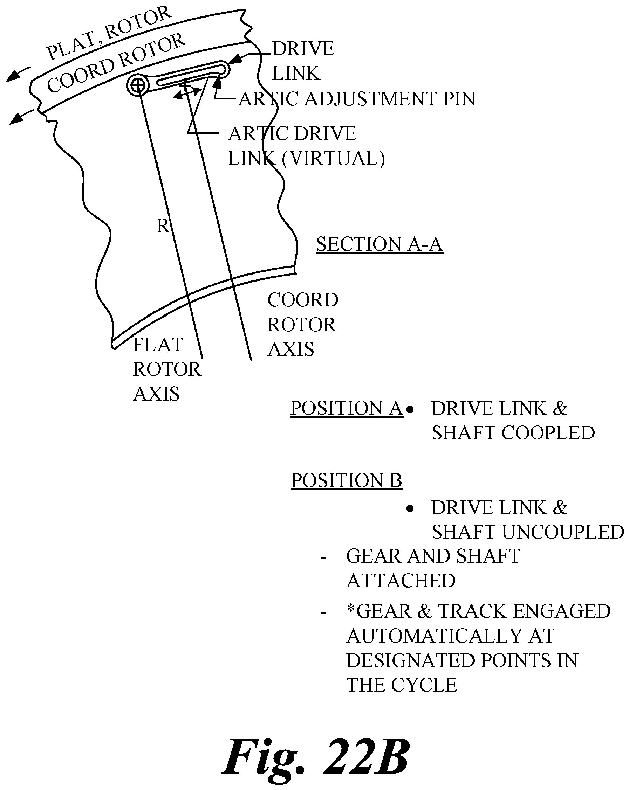

FIG.22B illustrates yet another embodiment of the invention.

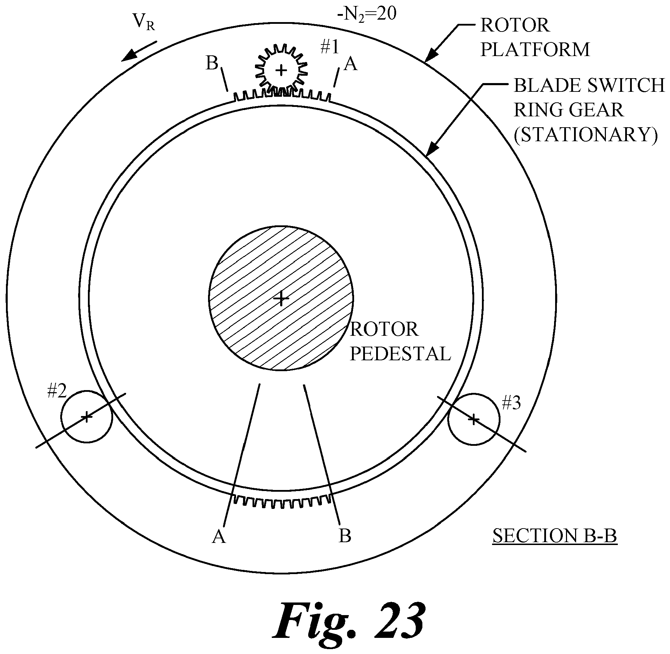

FIG.23 illustrates Section B-B of the rotor pedestal.

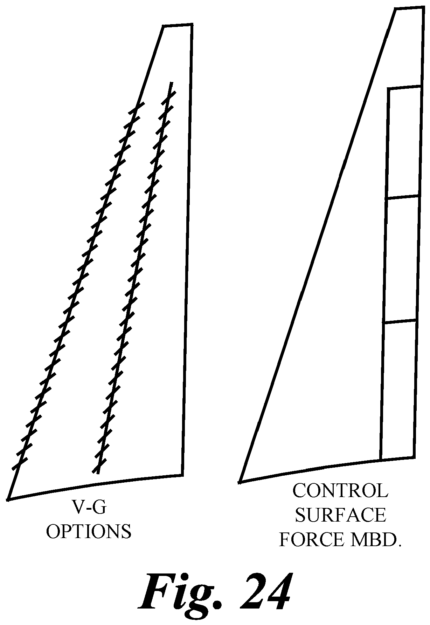

F1G.24 illustrates V-G options and control surface force mbd.

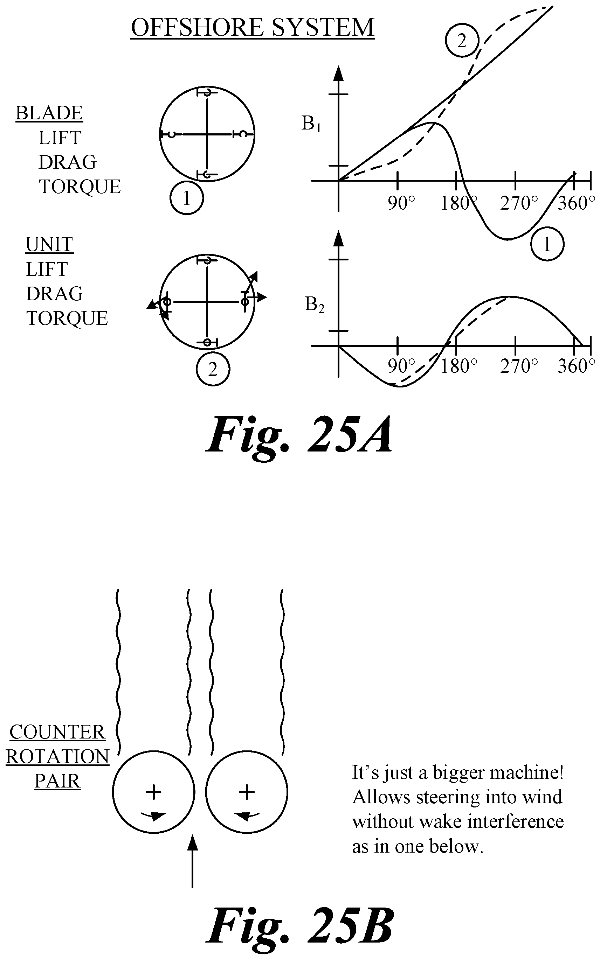

FIG.25A illustrates the off-shore system embodiment of the invention.
FIG.25B illustrates the counter rotation pair.

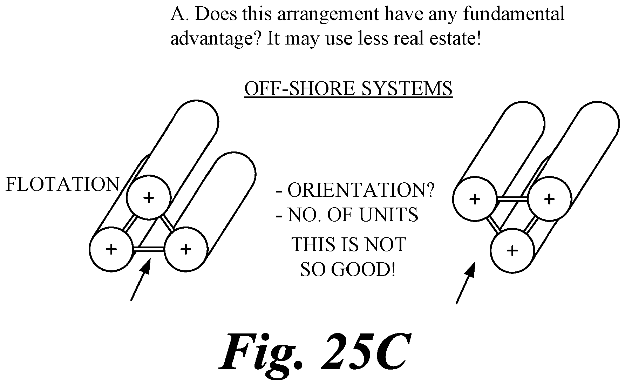

FIG.25C illustrates the off-shore systems.

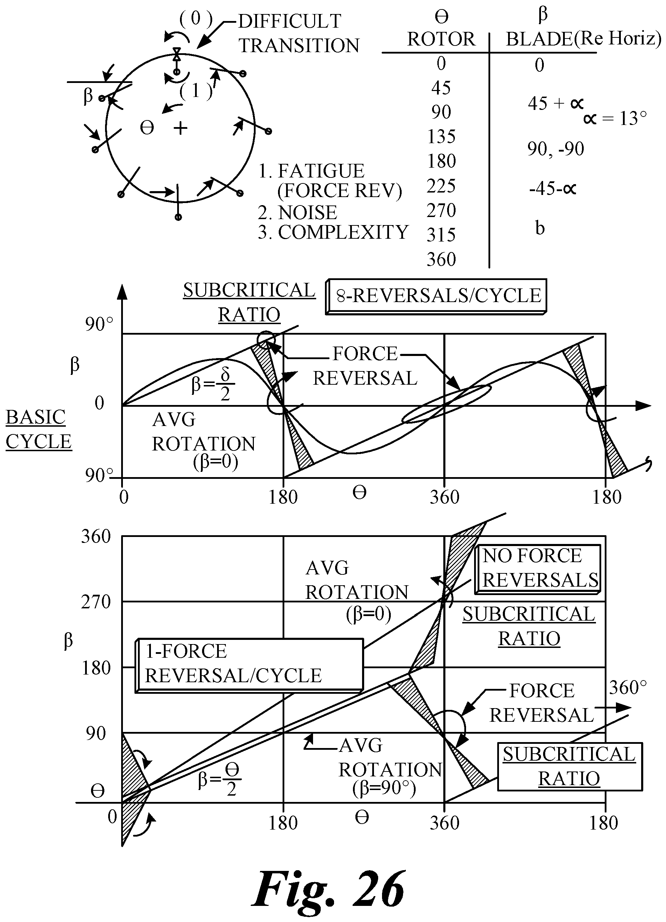

FIG.26 illustrates yet another embodiment of the invention.

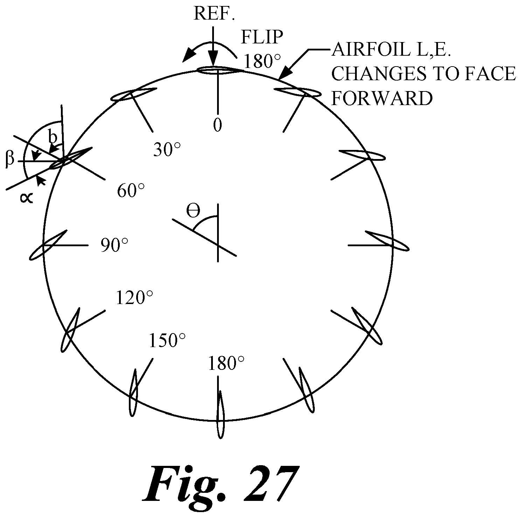

FIG.27 illustrates yet another embodiment of the invention.

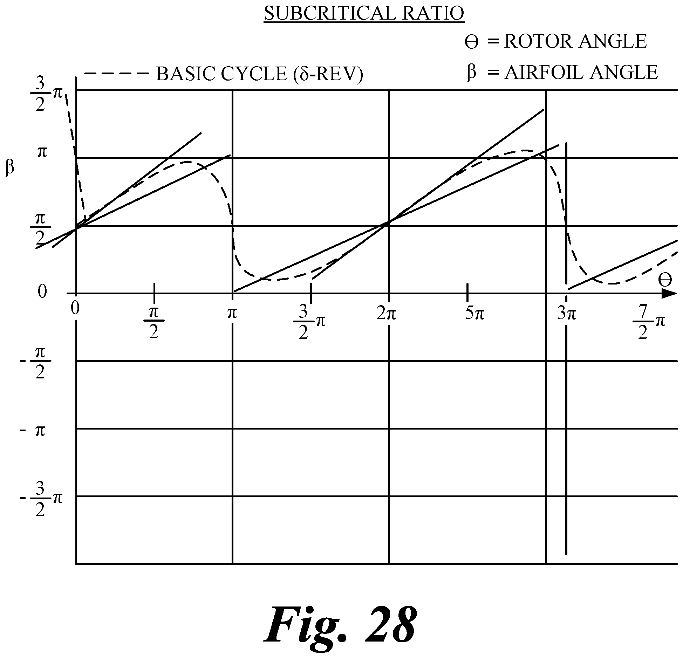

FIG.28 illustrates the subcritical ratio of the invention.

**DETAILED DESCRIPTION OF THE PREFERRED EMBODIMENT**

In one embodiment of the invention, the Wind Cyclo-Turbine is a mechanical device system that draws power from the wind by means of near-vertical blades pivotally mounted on a platform rotor that is flush with the ground and rotatable about a vertical axis. Wind forces are generated on the blades causing the platform rotor to turn thereby generating shaft power. An electrical generator coupled to the platform rotor converts the shaft power to electrical power, which is then distributed through conventional transmission means. The power output is maximized for a given wind speed by cyclically controlling each blade rotation to intercept the relative wind vector so as to create maximum blade forces over the periodic cycle. The blade axes are canted to match the rotational speed to the normal speed gradient of the prevailing wind to maintain constant $(\pi{*}h{*}D)Vw$ at all levels. The turbine is mounted atop an earth mound tailored to accelerate the flow near the ground to produce an optimum wind speed profile. The rotor speed is controlled to match the wind speed within narrow limits for maximum efficiency and power output.

The cyclo-turbine generates less noise than the usual tower-mounted fan turbine. Furthermore, the cyclo-turbine incorporates tip devices to minimize noise and increase aerodynamic efficiency. In an embodiment, this device is a Spiroid, which redistributes blade tip vorticity into a continuous sheet emanating from the blade trailing edge. Thus, interaction due to a blade crossing a preceding wake will produce minimum noise.

Contributing to efficiency and high power extraction is the programming of angle-of-attack of each blade through a coordination mechanism that may be slaved to the platform rotor. The control system comprises a coordination rotor that rotates about a center offset from the main rotor axis and appropriate linkages. The coordinating rotor is linked to each blade through a concentric dual lever system that is driven by the coordination rotor. Blade motion amplitude is adjustable by means of a proportional actuator mounted on the coordination rotor.

The blade coordination system includes the following three functions:

1. Blade Feathering whereby the blades can be directed simultaneously into the prevailing wind, as sensed by a system of an embodiment, under static conditions.
2. Coordinated System Orientation whereby the collective blade motion can be referenced to the prevailing wind, as sensed by a system of an embodiment, for best performance and for starting operation.
3. Cyclic Amplitude Control whereby the amplitude of collective blade motion and rotor speed can be adjusted for optimum performance depending on wind speed and direction sensed by a system of an embodiment.

Advantages of the Cyclo-turbine over other types of turbines, especially the ubiquitous tower-mounted fan turbine, include the following:

Much or all of the heavy equipment is located at or below ground level. This makes for ease of construction, ease of maintenance and reduced overall costs.

The power generation cycle is more efficient aerodynamically and operationally. Combined with structural advantages, this translates into 4 to 5 times more power generated per unit wind capture area and speed.

The structural configuration is more adaptable to large unit size which will favorably affect unit costs and the economics of large systems.

The flexibility of configuration characteristics will allow a wider range of unit sizes and applications. Site placement versatility can enhance the effectiveness of existing power distribution systems and reduce infrastructure limitations.

An embodiment of the invention includes a mechanical system comprising a circular rotor-platform rotatable about a vertical axis that incorporates several near-vertically oriented blades that may be wing-like in structure and design. These blades are mounted in receptacles on the rotor-platform and free to rotate independently about their axes. The rotor-platform is flush with the ground surface, which is contoured to increase this wind speed near the ground. The platform is caused to turn by the wind forces on each blade thereby generating power that is converted through an electrical generator coupled to the rotor-platform. These comprise all the heavy machinery including the rotor-platform, supporting structure and bearing units. The electrical generator shown is based on linear generator/motor technology and magnetic components arranged in circular form. This approach allows a substantial range of frequency control through switching strategies employed as a function of wind speed, rotor speed and power output. The elimination of large gear box units improves reliability and provides more flexibility in frequency control and better matching with power distribution systems.

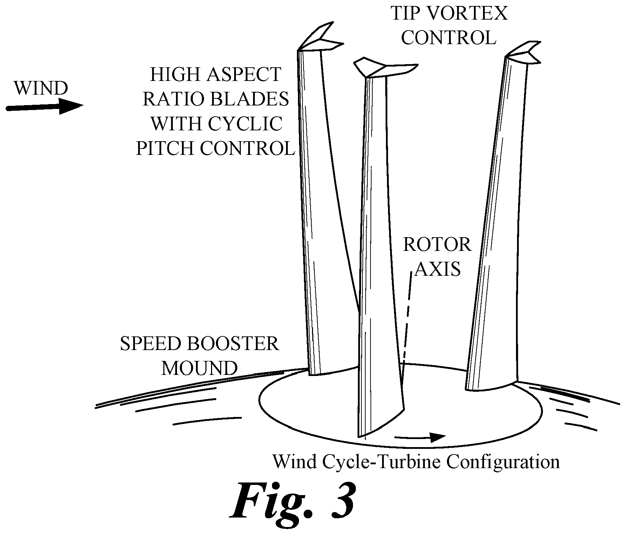

The blade orientation is controlled by a coordination rotor that rotates in synchrony with the rotor-platform. This arrangement is shown in Figure 3 which is a view from the underside of the rotor-platform, which describes the essential elements of the blade angle-of-attack coordination system. The rotor that is pivotally attached to each blade also modulates the blade angle-of-attack to produce blade forces that maximize the power output for each cycle as appropriate for wind speed, direction and operating condition.

The operating condition is defined by the ratio of rotor speed to wind speed and the blade pitch index. The blade pitch index is position setting of the coordination mechanism, which controls blade pitch amplitude and cyclic variation. The speed ratio for best efficiency is near unity and the corresponding pitch index is set independently for maximum power output. As wind speed increases beyond a structurally determined operating limit, power output may continue to increase as efficiency decreases. This trend can continue to the point where other factors such as blade loading are exceeded. The diagram below illustrates the essential character of the operating envelope.

The noise generated by a fan-turbine particularly when operated in an ensemble of many units, is a significant environmental issue, and the cyclo-turbine can in fact create similar objectionable characteristics. This is due to the effect of blades crossing the wakes of preceding blades. A tip device is installed on each blade to prevent significant interactions and also increase aerodynamic efficiency of the system by diffusing the normal wing tip vortex. These devices can take the form of winglet or Spiroid which are more effective since the profile is a closed loop.

Figure 1 shows a 3 blade arrangement comprising vertically oriented blades rotatable about their spanwise axis mounted on a rotor platform. Figure 2 shows each blade 1 is placed in a bearing receptacle, 2 which allows free rotation about its spanwise axis. The rotor platform 3 is rotatable about a vertical axis and constrained in its orbit by means of bearing systems at the periphery of the platform 4 and the central post 5 providing vertical and radial support to the platform,

Wind forces on the blades cause the platform to rotate about its axis at a rate constrained by the torque of the coupled electrical generating system. Power output is proportional to torque multiplied by RPM of the rotor. The generator is an adaptation of linear motor/generator technology whereby a circular stator 6 concentric with the rotor 3 comprises appropriate magnetic and electrical power and control circuitry enables the electrical power output of the system. A concentric circular array of magnetic poles, 7 either permanent or electromagnetic, is fixed to the rotor platform to complete the elements of the generator system.

The driving torque is provided by the blades 1, which are controlled in pitch about their axes in a manner that aligns with the relative wind to create an optimum distribution of blade forces through the cycle thereby maximizing the power output. Figure 3 is an underside view of the rotor system which includes a coordinating rotor that controls blade pitch throughout. In this arrangement, the coordinating rotor 8 rotates about a separate axis 9 and is coupled to each blade receptacle through lever 10 which remains parallel to the wind direction throughout the cycle. The coordinating rotor 8 is also coupled to each blade through a second lever 11 whose motion is cyclically controlled by means of an adjustable pin 12 offset from each coordinating rotor bearing 13. The amplitude of the blade angle is proportional to the pin offset dimension which is adjustable by means of a controlling proportional actuator (electrical).

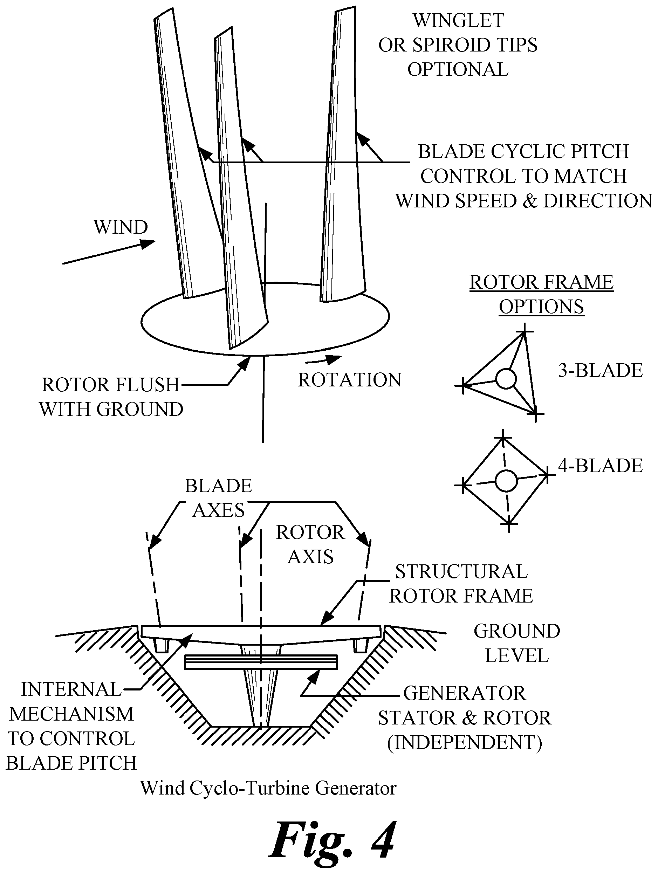

Figure 4 presents kinematic relationships between the blades and the rotor platform as functions of wind speed, rotor speed and blade orientation. The system performance is shown to depend on the following parameters:

Advance Ratio $\dfrac{\pi m D}{V_n}$

Wind Speed and Gradient $V_n \dfrac{dV_w}{dh}$

Blade Angle Schedule ($\beta$ versus $\theta$)

Cant Angle

Wake Characteristic

Unit Size

For typical range of these parameters and operating conditions, the power output is expressed as:

$$\text{Power Output} = [\ \ ] \text{ Megawatts}$$

$$\text{Size} = ?D = \text{Wind Capture Area}$$

The output can be compared to a similarly sized tower-mounted fan turbine which is usually given as:

$$\text{Power Output} = [\ \ ] \text{ Megawatts}$$

$$\text{Size} = \dfrac{\pi L D^2}{4}$$

= Wind Capture Area

This provisional patent application is intended to describe one or more embodiments of the present invention. It is to be understood that the use of absolute terms, such as "must," "will," and the like, as well as specific quantities, is to be construed as being applicable to one or more of such embodiments, but not necessarily to all such embodiments. As such, embodiments of the invention may omit, or include a modification of, one or more features or functionalities described in the context of such absolute terms.

Embodiments of the invention may be described in the general context of computer-executable instructions, such as program modules, being executed by a processing device having specialized functionality and/or by computer-readable media on which such instructions or modules can be stored. Generally, program modules include routines, programs, objects, components, data structures, etc. that perform particular tasks or implement particular abstract data types. The invention may also be practiced in distributed computing environments where tasks are performed by remote processing devices that are linked through a communications network. In a distributed computing environment, program modules may be located in both local and remote computer storage media including memory storage devices.

Embodiments of the invention may include or be implemented in a variety of computer readable media. Computer readable media can be any available media that can be accessed by a computer and includes both volatile and nonvolatile media, removable and non-removable media. By way of example, and not limitation, computer readable media may comprise computer storage media and communication media. Computer storage media include volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can accessed by computer. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer readable media.

According to one or more embodiments, the combination of software or computer-executable instructions with a computer-readable medium results in the creation of a machine or apparatus. Similarly, the execution of software or computer-executable instructions by a processing device results in the creation of a machine or apparatus, which may be distinguishable from the processing device, itself, according to an embodiment.

Correspondingly, it is to be understood that a computer-readable medium is transformed by storing software or computer-executable instructions thereon. Likewise, a processing device is transformed in the course of executing software or computer-executable instructions. Additionally, it is to be understood that a first set of data input to a processing device during, or otherwise in association with, the execution of software or computer-executable instructions by the processing device is transformed into a second set of data as a consequence of such execution. This second data set may subsequently be stored, displayed, or otherwise communicated. Such transformation, alluded to in each of the above examples, may be a consequence of, or otherwise involve, the physical alteration of portions of a computer-readable medium. Such transformation, alluded to in each of the above examples, may also be a consequence of, or otherwise involve, the physical alteration of, for example, the states of registers and/or counters associated with a processing device during execution of software or computer-executable instructions by the processing device.

As used herein, a process that is performed "automatically" may mean that the process is performed as a result of machine-executed instructions and does not, other than the establishment of user preferences, require manual effort.

One or more embodiments of the invention may include wing-like blades (rotatable) that may include tip winglets. Blades may be substantially straight or may be curved along their lengths. One or more embodiments of the invention may include a base rotor (with bearing receptacles) that is rotatable and may be situated below terrestrial ground surface, but only the rotor, and not the blades, is below-ground. One or more embodiments of the invention may include a control mechanism configured for cyclic control of the blades. One or more embodiments of the invention may include an electric power generating system.

More specifically, one or more embodiments of the invention may include the following features:

**Blade Design**

Rotatable blades mounted on a rotating platform supported by low-friction bearings from a fixed base.

Cyclic blade rotation to maximize torque (controlled angle-of-attack ("AOA") variation).

Cyclic blade rotation to minimize fatigue stress. Matched to following options:

two reversals: symmetric airfoil/vortex generators
one reversal: double airfoil symmetry, maximum lift coefficient ("CLmax") devices
zero reversal: double airfoil symmetry, hinged surfaces, vortex generators (cyclic AOA drive schemes for each)
Cycling controlled with a mechanism to adapt to wind conditions (speed and direction). Mechanism provides externally controlled AOA variation to:

maximize efficiency
limit blade loads and fatigue stress
minimize noise
maximize power extraction
Blades tilted at angle to accommodate wind gradients for:

max efficiency
power output
optimum control
Configuration options using wing tip Winglet or Spiroid for:

max efficiency and power output
minimize noise
adapt to high wind speeds
minimize danger to wildlife
maximum use of land available
Vortex generators to maximize torque and power output, avoid buffet
Blade platform and thickness tailored for max efficiency
System Design
Linear electrical generator technology employed to:
avoid or exclude gear box use
minimize wear
optimize frequency control
Blade feathering system adjustable for:

low-speed start
shut-down at high wind speeds
adapt to wind speed variations and direction
Minimize friction using magnetic bearing technology on some or all bearings.
Wing tip devices to reduce noise and increase efficiency.
Not dangerous to wild life:
low blade velocity
horizontal motion vs. rotation

Minimize "visible pollution."

Wind speed multiplier mound (i.e. Install above ground/fill-in at completion).

Adaptable to off-shore site selection.

Starting at low wind speed is assured by automatic blade AOA schedule to adapt to wind conditions.

An embodiment, which may be referred to herein as a Wind Cyclo-Turbine, represents a new concept in wind power generation. The Wind Cyclo-Turbine system comprises a rotating circular platform (the rotor) from which several wing-type blades are mounted vertically and are rotationally independent about each blade axis. The rotor may be flush with the ground and as it turns, each blade may be continually controlled and manipulated to optimally intercept the resultant wind vector so as to provide the maximum available torque throughout the cycle. The rotor is coupled to an electrical generator below ground level to complete the system.

Fundamental analysis of key issues and performance characteristics shows that the Cyclo-Turbine can produce four to five times the power of a conventional fan-type turbine generator combination mounted on a tower for the same wind conditions. This comparison applies to two machines that intercept the same wind flow cross-section area. Other advantages include a greater economy of sizing which allows higher power output per unit, siting flexibility, easier access and maintenance, lower environmental impact and more.

An electrical power generating system based on the Wind Cyclo-Turbine is proposed as a viable alternative to the conventional tower-mounted fan-type power generating system currently in wide use throughout the world.

## The Wind Cyclo-Turbine Concept According To An Embodiment

The Wind Cyclo-Turbine power system represents a departure from the predominant fan-type turbine and electrical generator combination, which is virtually the only means used today for wind power generation throughout the world. The configuration shown in Figure 2 above may be a large unit, which may be part of an array in a field of such systems.

The Wind Cyclo-Turbine power system represents a departure from the predominant fan-type turbine and electrical generator combination, which is virtually the only means used today for wind power generation throughout the world. The configuration shown in Figure 2 above may be a large unit, which may be part of an array in a field of such systems.

It is apparent that each blade crosses the wakes of the blades ahead of it in the cycle. The interaction can be expected to produce force "perturbations" and some sound associated with them. For the most part, however, these wake crossings involve a gradual penetration because of the blade cant angle. Furthermore, the wake vorticity is quite weak resulting in minimal disturbances. However, near the blade tip, the vorticity may be large, so some significant flow disturbance and sound could result. Special attention to the blade tip design can minimize this effect. Finally, the vortex wake produces induced flow angles at each blade that are considered in cycle optimization.

Structural Issues

Because of changing blade loads throughout the cycle, the question of fatigue may be of some concern. Although the rotational frequency may be quite low (e.g., 10 RPM); the direction of load on the blade reverses twice during each cycle. This corresponds to about $5 \times 10^6$ reversals per year for near continuous operation. The use of composites for blade structure and low design stress levels may be employed to accommodate this situation. While the use of lower design stresses may adversely affect the structural weight, the configuration of the system and the concentration of the massive parts at ground level may tend to minimize the effects of component weight on performance.

System Economics

The issue of economics of the system relative to other alternatives ultimately plays a major role in determining its competitive advantage. A serious consideration of the advantages of the Wind Cyclo-Turbine can indicate the likely outcome of such an assessment which is listed below.

Advantages

Economics

High Aerodynamic Efficiency

$$\text{High Energy Density,} \quad \frac{\text{Megawatts Output}}{\text{Intercept Area} \times (\text{Wind Speed})^3}$$

Heavy components at or below ground
Ease of maintenance
Linear generator design (no gear box required)
Multiple installation compatibility
Lower investment per Megawatt
Sizing flexibility

Site Adaptability

Matched to Wind Gradient (Blade cant angle)
Adaptability to site topography

Wind Speed Amplification with ground contouring
Adaptability to wind speed and direction

Environmentally Acceptable

Noise controlled (blade design)
Low visual impact (acceptable for multiple arrays)
Reduced system "footprint"
These advantages tend to overshadow those for a wind fan-type turbine installation. Their importance may vary in relation to the specific configuration of wind power system selected for comparison. However the overall conclusions are expected to have general validity.
An attraction of an embodiment of the Wind Cyclo-Turbine stems from certain unique physical characteristics that contribute to the following advantages in relation to other forms of wind power generation:

Higher efficiency (more power for a given size and wind speed)
Less fixed investment per megawatt output (smaller size, better site utilization)
Adaptable to any size and flow environment
Designed for reliability and durability
Ease of access and maintenance
Environmentally acceptable in multiple arrays (lower "footprint," less noise and visual impact).

**Claims**

1.   A wind turbine, comprising:

a rotor base coupled to a generally horizontal supporting surface and rotatable about a rotor-base axis generally perpendicular to the supporting surface;
a plurality of blade elements extending from the rotor base and having distal blade tip portions, and blade base portions opposite the distal blade tip portions and coupled to the rotor base, each blade element having a respective angle of attack, each blade base portion having a base-portion axis generally perpendicular to the rotor base, each blade element being rotatable about its respective base-portion axis thereby altering the respective angle of attack of each respective blade element; and
a controller coupled to the blade elements and configured to rotate each blade element;
**characterized in that** each distal blade tip portion has a distal blade tip vortex control device.

2.   The turbine of claim 1, further comprising an electrical-power generator coupled to the rotor base.

3.   The turbine of claim 2, wherein:

the supporting surface is formed within a recess of a terrestrial surface,
said rotor base is substantially flush with the terrestrial surface; and
the entirety of the generator is disposed within the recess and below the terrestrial surface.

4.   The turbine of claim 1, wherein each distal blade tip vortex control device comprises a winglet or a spiroid.

**Patentansprüche**

1.   Windturbine, die Folgendes umfasst:

eine Rotorbasis, die mit einer im Allgemeinen horizontalen Auflageoberfläche gekoppelt und um eine Rotorbasisachse rotierbar ist, die im Allgemeinen senkrecht zu der Auflageoberfläche verläuft;
mehrere Schaufelelemente, die sich aus der Rotorbasis erstrecken und distale Schaufelspitzenabschnitte und Schaufelbasisabschnitte aufweisen, die den distalen Schaufelspitzenabschnitten gegenüberliegen und mit der Rotorbasis gekoppelt sind, wobei jedes Schaufelelement einen jeweiligen Anstellwinkel aufweist, wobei jeder Schaufelbasisabschnitt eine Basisabschnittsachse aufweist, die im Allgemeinen senkrecht zu der Rotorbasis verläuft, wobei jedes Schaufelelement um seine jeweilige Basisabschnittsachse rotierbar ist, wobei dadurch der jeweilige Anstellwinkel jedes jeweiligen Schaufelelements geändert wird; und
eine Steuerung, die mit den Schaufelelementen gekoppelt und konfiguriert ist, um jedes Schaufelelement zu rotieren;
**dadurch gekennzeichnet, dass** jeder distale Schaufelspitzenabschnitt eine Steuervorrichtung einer Wirbelröhre der distalen Schaufelspitze aufweist.

2. Turbine nach Anspruch 1, die ferner einen Generator einer elektrischen Leistung umfasst, der mit der Rotorbasis gekoppelt ist.

3. Turbine nach Anspruch 2, wobei:

   die Auflageoberfläche innerhalb einer Aussparung einer Erdoberfläche ausgebildet ist,
   die Rotorbasis im Wesentlichen mit der Erdoberfläche bündig ist; und
   die Gesamtheit des Generators innerhalb der Aussparung und unter der Erdoberfläche angeordnet ist.

4. Turbine nach Anspruch 1, wobei jede Steuervorrichtung der Wirbelröhre der distalen Schaufelspitze ein Winglet oder ein Spiroid umfasst.

## Revendications

1. Turbine éolienne, comprenant :

   une base de rotor accouplée à une surface de support généralement horizontale et pouvant être mise en rotation autour d'un axe de base de rotor généralement perpendiculaire à la surface de support ;
   une pluralité d'éléments de pale s'étendant depuis la base de rotor et ayant des parties d'extrémité de pale distales, et des parties de base de pale opposées aux parties d'extrémité de pale distales et accouplées à la base de rotor, chaque élément de pale ayant un angle d'attaque respectif, chaque partie de base de pale ayant un axe de la partie de base généralement perpendiculaire à la base du rotor, chaque élément de pale pouvant être mis en rotation autour de son axe de partie de base respectif, modifiant ainsi l'angle d'attaque respectif de chaque élément de pale respectif ; et
   un dispositif de commande accouplé aux éléments de pale et configuré pour mettre chaque élément de lame en rotation ;
   **caractérisé en ce que** chaque partie d'extrémité de pale distale a un dispositif de commande de tourbillon d'extrémité de pale distale.

2. Turbine selon la revendication 1, comprenant en outre un générateur d'énergie électrique accouplé à la base du rotor.

3. Turbine selon la revendication 2 :

   la surface de support étant formée à l'intérieur d'un évidement d'une surface terrestre,
   ladite base de rotor affleurant sensiblement la surface terrestre ; et
   l'intégralité du générateur étant disposée à l'intérieur de l'évidement et sous la surface terrestre.

4. Turbine selon la revendication 1, chaque dispositif de commande de tourbillon d'extrémité de pale distale comprenant une ailette ou un spiroïde.

Wind turbines in the field at Altamont Pass, California.

*Fig. 1*

# The Wind Cyclo-Turbine

"High on a Windy Hill"

*Fig. 2*

WIND

TIP VORTEX
CONTROL

HIGH ASPECT
RATIO BLADES
WITH CYCLIC
PITCH CONTROL

ROTOR
AXIS

SPEED BOOSTER
MOUND

Wind Cycle-Turbine Configuration

*Fig. 3*

WINGLET
OR SPIROID TIPS
OPTIONAL

BLADE CYCLIC PITCH
CONTROL TO MATCH
WIND SPEED & DIRECTION

WIND

ROTOR FRAME
OPTIONS

3-BLADE

4-BLADE

ROTOR FLUSH
WITH GROUND

ROTATION

BLADE
AXES

ROTOR
AXIS

STRUCTURAL
ROTOR FRAME

GROUND
LEVEL

INTERNAL
MECHANISM
TO CONTROL
BLADE PITCH

GENERATOR
STATOR & ROTOR
(INDEPENDENT)

Wind Cyclo-Turbine Generator

*Fig. 4*

$$\text{\cyr U}/\pi\text{n}D = 1.0$$

Cross Section of Blade Wake Traces

## *Fig. 5*

## CYCLO-TURBINE INSTALLATION

TIPVORTEX CONTROL OPTIONS
-WINGLET
-SPIROID
-LOAD GRAD.

A  A

SYMMETRIC AIRFOILS
HIGH LOADING WITH
SEPARATION CONTROL

3 – BLADES
ROTATIONALLY
INDEPENDENT –
CYCLIC CONTROL FOR
OPTIMUM LOADING

STRUCTURAL
ROTOR FRAME

GROUND LEVEL

INTERNAL MECHANISM
TO CONTROL PITCH

GENERATOR
ROTOR & STATOR

## *Fig. 6*

# SYSTEM CHARACTERISTICS COMPARISON

|  | Cyclo-Turbine | Fan Turbine |
|---|---|---|
| UNIT HEIGHT | 200 FT | 250 FT |
| MIN. DIAMETER | 75 FT | 200 FT |
| BLADE CHORD | 22 FT | 10 FT |
| BLADE ASPECT RATIO | 11 | 10 |
| BLADE AREA (E BLADES) | 15,000 | 4000 |
| MAX. DIAMETER | 150 FT | 200 FT |
| ROTOR SPEED | 15 RPM | 10 RPM |
| MAX. VWIND | 40 MPH + | 30 MPH |
| POWER OUTPUT | 10 MW | 2 MW |

*Fig. 7*

# CYCLE-TURBINE ADVANTAGES

▷ ECONOMIC
  ▷ HIGH AERODYNAMIC EFFICIENCY
  ▷ HIGH ENERGY OUTPUT, MEGAWATTS/FLOW AREA x$V^3$
  ▷ HEAVY COMPONENTS BELOW GROUND
  ▷ LINEAR GENERATOR DESIGN (NO GEAR BOX)
  ▷ LOWER INVESTMENT PER MEGAWATT
  ▷ SIZING / CONFIGURATION FLEXIBILITY
  ▷ LOW MAINTENANCE COST

## *Fig. 8*

# CYCLE-TURBINE ADVANTAGES (cont.)

▷ SITE ADAPTABILITY
  ▷ MATCH TO WIND GRADIENT (BLADE CAN'T ANGLE)
  ▷ COMPATIBLE WITH SITE TOPOGRAPHY
  ▷ WIND SPEED AUGMENTATION (GROUND CONTOUR)
  ▷ ADAPTABLE TO HIGHER WIND SPEED AND DIRECTION

▷ ENVIRONMENTAL CONCERNS
  ▷ NOISE MITIGATION (BLADE TIP DESIGN)
  ▷ LOW VISUAL IMPACT
  ▷ REDUCED SYSTEM "FOOTPRINT"
  ▷ MULTIPLE INSTALLATION COMPATIBILITY

## *Fig. 9*

# CONCLUSIONS

▷ PRELIMINARY ANALYSES INDICATE LARGE PERFORMANCE BENEFIT OF CYCLO-TURBINE SYSTEM RELATIVE TO FAN TURBINE WITH SIMILAR FOOTPRINT

▷ POWER POTENTIAL UP TO FIVE TIMES FAN TURBINE OUTPUT. CONCEPT APPLICATION NOT LIMITED BY TECHNICAL ISSUES

▷ CYCLO-TURBINE TECHNOLOGY ADAPTABLE TO A WIDE RANGE OF UNIT SIZES (MEGA SYSTEMS VS. DOMESTIC)

## *Fig. 10*

## *Fig. 11*

# CYCLO-TURBINE CONFIGURATION

TIPVORTEX
CONTROL

HIGH ASPECT RATIO
BLADES (TAPER 2:1)

WIND SPEED

UP TO 40 MPH
LOADING 4PSF
SPEED GRADIENT, 2:1

ROTOR
AXIS

200 FT

CYCLIC
PITCH CONTROL

SPEED BUMP

15 RPM

75 FT

## Fig. 12

# AERODYNAMIC ISSUES

IMPULSIVE START

BLADE WAKE TRACES $\left(\dfrac{\pi n D}{V}\right) = 1$

- ▷ NOISE GENERATED:
  - ▷ BLADE CROSSING PRECEEDING WAKES
- ▷ NOISE MITIGATION:
  - ▷ DIFFUSE WAKE VORTICITY
  - ▷ REDUCE STRENGTH OF WAKE VORTICITY
  - ▷ REDUCE TIP LOAD ON BLADES
- ▷ INDUCTION EFFECTS ON PERFORMANCE
  - ▷ POWER OUTPUT LIMITS
  - ▷ OPTIMUM OPERATING CONDITIONS

## *Fig. 13*

## ENERGY STORAGE

PENSION   CENT. FORCE

$\cancel{A}T\cancel{\Delta\theta} = P\cancel{A}R\cancel{\Delta\theta}\ Rw^2$

$T = PR^2w^2 = \forall\Delta$

$\forall = Pw^2\dfrac{R^2}{\Delta}$   STRESS

$Y = 2\pi Rn$
$W = 2\pi n$
$V = Rw$

$\text{ENERGY} = \dfrac{P}{2}\Delta\,2\pi R - R^2w^2$

$= 2\pi\dfrac{P}{2}\Delta R^3w^2 = 2\pi,PAR\,\dfrac{V^2}{2}$

$= \dfrac{\forall\pi PAR^3w^2}{Pw^2R^2/A} = \pi\forall A^2R = \dfrac{1}{2}T\Delta$

## *Fig. 14*

*Fig. 15*

Bearing Post Fixed to Rotor Plod Form

(Bearing not shown)

MAIN ROTOR

BLADE HUB

COORD ROTOR

When coordinating angle length =

$$\delta + \beta - \frac{\pi}{2} + 180 - \Theta = 180$$

$$\delta = \Theta - \beta + \frac{\pi}{2}$$

$$b = C \cos\left(\beta - \frac{\pi}{2}\right) + B \cos(180 - \Theta)$$

$$\frac{a}{\sin\left(\beta - \frac{\pi}{2}\right)} = \frac{c}{\sin(180-\Theta)} - \frac{b}{\sin(\delta)}$$

$$\sin\left(\beta - \frac{\pi}{2}\right) = \frac{a}{b} \sin\left[\Theta - \left(\beta - \frac{\pi}{2}\right)\right]$$

$$= \frac{a}{b}\left[\sin\Theta \cos\beta - \frac{\pi}{2}\right] - \cos\Theta \sin\beta - \frac{\pi}{2}$$

$$\sin\beta - \frac{\pi}{2}\left(\delta + \frac{a}{b}\cos\Theta\right) = \frac{a}{b}\sin\Theta \cos\beta - \frac{\pi}{2}$$

$$\cos\beta = \frac{-\frac{a}{b}\sin\Theta}{\left(1 + \frac{a}{b}\cos\Theta\right)}$$

# *Fig. 16*

HIGH AR
BLADE (3)

WIND →

2

SPEED
MOUND

1

2

2

ROTATION
AXES

3

$$\frac{V_\delta}{\pi n \gamma} \doteq 1.0$$

$$15 < \frac{V}{V_W} < Z$$

ROTATION

ROTOR-PLATFORM

GENERAL ARRANGEMENT

*Fig. 17*

ROTOR
PLATFORM

ROTOR
UPPER
BEARING

ELECTRICAL
POWER
GENERATOR
(SYNCHROUS)

ROTOR HOWER BEARING

SUB-GRADE CONFIGURATION

*Fig. 18*

GALLIC OFFSET

BLADE HUB

CYCLIC PITCH CONTROL (SUPPORTED BY COORD, ROTOR)

COORD, ROTOR AXIS

ROTOR - PLATFORM

ROTOR – FLAT AXIS

COORDINATION ROTOR

BLADE ARTICULATING ARM CONTROL

BLADE HUB

BLADE HUB

$\beta - \dfrac{\pi}{2}$

BLADE COORD, LINK, b

VERTICAL SUPPORT BEARING POST

$$\tan\beta = \dfrac{f + \dfrac{a}{b}\cos\Theta}{\dfrac{a}{b}\sin\Theta}$$

*Fig. 19*

EP 3 426 915 B1

$$\frac{V}{\pi nD} = \frac{\sin\Theta}{\sin\delta}$$

$$\frac{V_w}{\pi nD} = \frac{\sin 8}{\sin\delta} = J$$

**Fig. 20**

TANGENT

$$\frac{\text{Ind. Vind}}{\text{E.g } \propto = \propto_g - X_i}$$

$$\frac{\sin(180-\Theta)}{\sin\delta} = \frac{V}{\pi nD} = \frac{\sin 8}{\sin\delta}$$

$$\frac{\sin 8}{\sin\delta} = \frac{V_w}{\pi nD} = J$$

$$\frac{\sin 8}{\sin(\Theta-\delta)} = J , \quad \text{SINCE} \quad \delta = \Theta - 8$$

$$\frac{\sin\Theta \cos 8 - \cos\Theta \sin 8}{\sin(\delta)} = J^{-1}$$

$$\sin\Theta \cos 8 - \cos\Theta = J^{-1}$$

$$\text{Tan } \delta = \frac{\sin\Theta}{J + \cos\Theta}$$

Also, ——

$$\gamma + \Theta + 98 = 180$$

$$\gamma = 90 - \Theta$$

$$\gamma + \delta + 180 - \mu = 180$$

$$\mu = \gamma + \delta = 90 - \Theta + \delta$$

$$= 90 - \tan^{-1}\frac{\sin\Theta}{\delta^{-1} + \cos\Theta}$$

$$\cot\mu = \tan(90-\mu) = \frac{\sin\Theta}{\delta^{-1} + \cos\Theta}$$

$$\mu = \tan^{-1}\left(\frac{2^{-1} + \cos\Theta}{\sin\Theta}\right)$$

$$\beta = \propto + \Theta + \mu$$

**Fig. 21**

**Fig. 22A**

PLAT. ROTOR

COORD ROTOR

DRIVE
LINK

ARTIC ADJUSTMENT PIN

ARTIC DRIVE
LINK (VIRTUAL)

R

SECTION A-A

FLAT
ROTOR
AXIS

COORD
ROTOR
AXIS

POSITION A • DRIVE LINK &
SHAFT COOPLED

POSITION B

• DRIVE LINK &
SHAFT UNCOUPLED

- GEAR AND SHAFT
ATTACHED

- *GEAR & TRACK ENGAGED
AUTOMATICALLY AT
DESIGNATED POINTS IN
THE CYCLE

*Fig. 22B*

*Fig. 23*

V-G
OPTIONS

CONTROL
SURFACE
FORCE MBD.

## Fig. 24

OFFSHORE SYSTEM

BLADE
  LIFT
  DRAG
  TORQUE

UNIT
LIFT
DRAG
TORQUE

$B_1$

$B_2$

*Fig. 25A*

COUNTER
ROTATION
PAIR

It's just a bigger machine!
Allows steering into wind
without wake interference
as in one below.

*Fig. 25B*

A. Does this arrangement have any fundamental advantage? It may use less real estate!

OFF-SHORE SYSTEMS

FLOTATION

- ORIENTATION?
- NO. OF UNITS

THIS IS NOT
SO GOOD!

*Fig. 25C*

( 0 )—DIFFICULT
TRANSITION

( 1 )

β

Θ +

1. FATIGUE
(FORCE REV)
2. NOISE
3. COMPLEXITY

| Θ ROTOR | β BLADE(Re Horiz) |
|---|---|
| 0 | 0 |
| 45 | |
| 90 | $45 + \alpha$   $\alpha = 13°$ |
| 135 | 90, -90 |
| 180 | |
| 225 | $-45-\alpha$ |
| 270 | |
| 315 | b |
| 360 | |

SUBCRITICAL
RATIO

8-REVERSALS/CYCLE

90°

β

0

$\beta=\frac{\delta}{2}$

FORCE
REVERSAL

BASIC
CYCLE

AVG
ROTATION
(β=0)

90°

0    180    Θ    360    180

360

270

β

180

1-FORCE
REVERSAL/CYCLE

90

Θ

0    180    Θ    360    180

AVG
ROTATION
(β=0)

NO FORCE
REVERSALS

SUBCRITICAL
RATIO

FORCE
REVERSAL

360°

$\beta=\frac{\Theta}{2}$

AVG
ROTATION
(β=90°)

SUBCRITICAL
RATIO

*Fig. 26*

REF.

FLIP
180°

AIRFOIL L,E.
CHANGES TO FACE
FORWARD

0

30°

60°

90°

120°

150°

180°

β

b

∝

Θ

*Fig. 27*

*Fig. 28*

**EP 3 426 915 B1**

**Patent documents cited in the description**

- WO 2005100785 A

- WO 2011039404 A